# EUROPEAN PATENT APPLICATION

(11) **EP 2 717 637 A1**
(43) Date of publication of application: **09.04.2014**
(21) Application number: 11866886.2
(22) Date of filing: 01.06.2011
(51) Int. Cl.: H04W 68/00

(54) **TRANSMISSION METHOD FOR MULTIPLE USER MULTIPLE INPUT MULTIPLE OUTPUT, USER EQUIPMENT AND BASE STATION THEREOF**

(71) Applicant: Fujitsu Limited, Kawasaki-shi, Kanagawa 211-8588 (JP)
(72) Inventor: ZHANG, Yi, Beijing 100025 (CN); ZHANG, Yuantao, Beijing 100025 (CN); ZHOU, Hua, Beijing 100025 (CN); WU, Jianming, Beijing 100025 (CN)
(74) Representative: Stebbing, Timothy Charles
(86) International application number: PCT/CN2011/075088
(87) International publication number: WO 2012/162885

(57) **Abstract**

Embodiments of the present invention provide an MU-MIMO transmission method, user equipment and base station. The method comprises: receiving by user equipment a signaling indication indicative of supporting a user to use a layer index transmitted by a base station, the signaling indication including a first layer index and a sum number of layers of the user equipment; and demodulating a received resource according to the first layer index and the sum number of layers of the user equipment; wherein in the resource, consecutive layer indices are adopted for data corresponding to the same user equipment. With the embodiments of the present invention, a mapping manner from a codeword to a layer may be further limited and optimized, and compromise of the feedback overhead, feedback accuracy and system signaling overhead may be better achieved.

## Description

### Technical Field

The present invention relates to the field of communications, and in particular to a multiple user multi-input multi-output (MU-MIMO) transmission method, user equipment and a base station.

### Background

The long-term evolution (LTE) scheme of 3GPP follows a conventional homogeneous network, which includes a hexagonal cellular system. In order to further improve capacity of the system, a heterogeneous network is introduced into an advanced long-term evolution (LTE-A) scheme of a wireless communication system of the next generation. An LTE-A system includes a macro cell, a femto cell, a pico cell, a remote radio head (RRH) and a relay. Not only the capacity of the system is improved by deploying new radio nodes, but also better services are provided to users in special areas, thereby optimizing performance of the system.

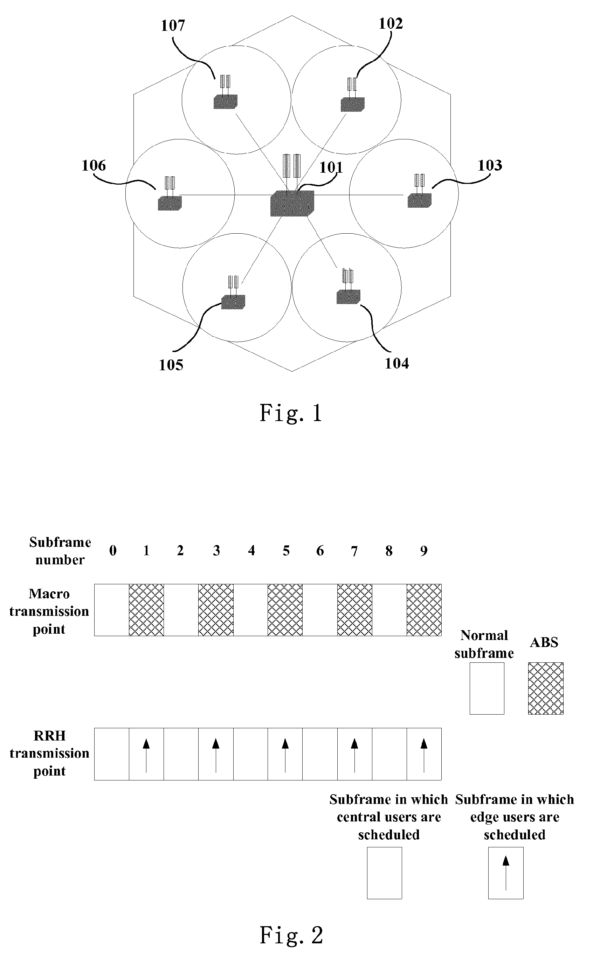

In the 3GPP RAN1 63 conference, a new heterogeneous scenario was proposed. Such a practical heterogeneous network includes a macro base station and RRHs. Figure 1 gives a schematic diagram of such a scenario, wherein, a macro base station 101 and RRHs 102-107 have identical cell IDs, and the macro base station and each of the RRHs are connected to each other via optical fibers. The RRHs are radio units only, and have no ability to perform a central process and a schedule. The macro base station processes data of the whole heterogeneous network, and transfers information related to the RRHs to the RRHs via the optical fibers.

The base station of the macro cell has relatively high transmission power and provides coverage of the whole cell. The RRHs have relatively low transmission power and provide coverage of hot spots. The macro base station and the RRHs may use identical time-frequency resources to transmit data, and improve the capacity of the system by using such a multiplexing manner. On the other hand, the data transmission of the macro base station has interference on the data transmission of the RRHs in the same resource. Therefore, an interference coordination scheme is needed to further lower the interference and optimize the performance of the system. The conventional almost blank subframe (ABS) scheme may be used to reduce mutual interference in data transmission.

Figure 2 gives an example of an ABS transmission scheme, wherein, the first, third, fifth, seventh and ninth subframes in the macro transmission point are made idle, and in the RRH transmission points, in the idle subframes corresponding to the macro transmission point, edge users are preferentially scheduled for transmission, and in other subframes central users are scheduled for transmission. With the technologies above, users of an RRH cell may transmit reliably, thereby ensuring the multiplexing of the central users of the cell and improving the capacity of the system relative to a conventional homogeneous network. However, the central users of the RRH transmission points are still interfered by the macro cell base station, which may lower the capacities of the central users of the RRH cells. The edge users of the RRH transmission points occupy the resources independently and the system cannot acquire the multiplexing gains. It can be seen that the interference of the macro transmission point on the RRH cell users limits the further improvement of the capacity of the system.

The MU-MIMO technology uses orthogonality of a space domain to reduce inter-user interference and improve the capacity of the system. It further improves the capacity of the system when it is used in a heterogeneous network. According to characteristics of distributed antennas, if a certain user is served by part of the antennas, a joint channel of these users is a rank-reduced channel viewing from joint virtual MIMO, and the MU-MIMO technology is relatively suitable for such a scenario.

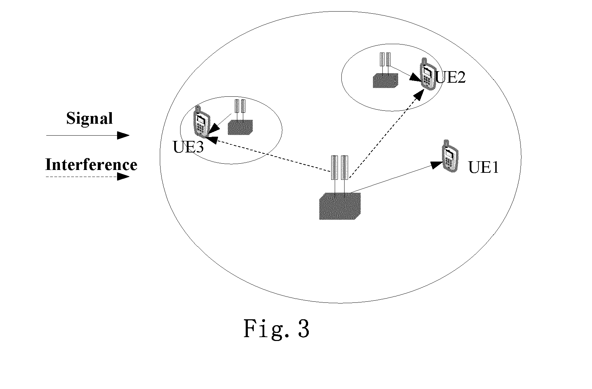

The MU-MIMO technology has the following characteristics in a heterogeneous network: (1) inequality of inter-user interference; this is because that the transmission power of the macro base station is relatively high, which has effect on the RRH users in the same resource, and the transmission power of the RRHs is relatively low, which has relatively low interference on the macro users in the same resource; (2) the RRH users perform data transmission in the same time-frequency resources, and the mutual interference is relatively low; and (3) data transmission of the macro cell has interference on all the RRH users. Figure 3 gives a schematic diagram of an interference scenario in a heterogeneous network. It can be seen from the figure that the advanced MU-MIMO technology is emphasized on the suppression of the interference of the macro base station to the RRH users.

However, in the implementation of the present invention, the inventors found that the defect of the relevant art resides in that: in a heterogeneous network, distributed antennas constitute a virtual MIMO system, and it is possible that information transmitted by the virtual MIMO system includes information of multiple users; however, as no further limitation and optimization in the existing mapping manner from a codeword to a layer, a compromised effect of the feedback overhead, feedback accuracy and system signaling overhead cannot be achieved.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary

Embodiments of the present invention provide an MU-MIMO transmission method, user equipment and a base station, to further limit and optimize a mapping manner from a codeword to a layer, and to further improve performance of the system.

According to one aspect of the embodiments of the present invention, there is provided an MU-MIMO transmission method, including:
receiving, by user equipment, a signaling indication indicative of supporting a user to use a layer index transmitted by a base station, the signaling indication including a first layer index and a sum number of layers of the user equipment; and
demodulating a received resource according to the first layer index and the sum number of layers of the user equipment; wherein in the resource, consecutive layer indices are adopted for data corresponding to the same user equipment.

According to another aspect of the embodiments of the present invention, there is provided an MU-MIMO transmission method, including:
providing, by user equipment, feedback information according to a position of the user equipment, so as to provide relevant interference information.

According to further another aspect of the embodiments of the present invention, there is provided an MU-MIMO transmission method, including:
configuring, by a base station for user equipment, a signaling indication indicative of supporting a user to use a layer index, the signaling indication including a first layer index and a sum number of layers of the user equipment; and
transmitting the signaling indication to the user equipment, such that the user equipment demodulates a received resource according to the first layer index and the sum number of layers; wherein in the resource, consecutive layer indices are adopted for data corresponding to the same user equipment.

According to still another aspect of the embodiments of the present invention, there is provided user equipment, including:
a signaling receiver, configured to receive a signaling indication indicative of supporting a user to use a layer index transmitted by a base station, the signaling indication including a first layer index and a sum number of layers of the user equipment; and
a resource demodulator, configured to demodulate a received resource according to the first layer index and the sum number of layers of the user equipment; wherein in the resource, consecutive layer indices are adopted for data corresponding to the same user equipment.

According to still another aspect of the embodiments of the present invention, there is provided user equipment, including:
an interference feedback device, configured to provide feedback information, so as to provide relevant interference information.

According to still another aspect of the embodiments of the present invention, there is provided a base station, including:
a signaling configuring device, configured to configure for user equipment a signaling indication indicative of supporting a user to use a layer index, the signaling indication including a first layer index and a sum number of layers of the user equipment; and
a signaling transmitter, configured to transmit the signaling indication to the user equipment, such that the user equipment demodulates a received resource according to the first layer index and the sum number of layers of the user equipment; wherein in the resource, consecutive layer indices are adopted for data corresponding to the same user equipment.

According to still another aspect of the embodiments of the present invention, there is provided a computer-readable program, wherein when the program is executed in user equipment, the program enables a computer to carry out the MU-MIMO transmission method as described above in the user equipment.

According to still another aspect of the embodiments of the present invention, there is provided a storage medium in which a computer-readable program is stored, wherein the computer-readable program enables a computer to carry out the MU-MIMO transmission method as described above in user equipment.

According to still another aspect of the embodiments of the present invention, there is provided a computer-readable program, wherein when the program is executed in a base station, the program enables a computer to carry out the MU-MIMO transmission method as described above in the base station.

According to still another aspect of the embodiments of the present invention, there is provided a storage medium in which a computer-readable program is stored, wherein the computer-readable program enables a computer to carry out the MU-MIMO transmission method as described above in a base station.

The advantages of the embodiments of the present invention reside in that: by configuring and transmitting a signaling indication indicative of supporting a user to use a layer index, the user equipment demodulates a received resource according to a first layer index and a sum number of layers in the signaling indication. A mapping manner from a codeword to a layer may be further limited and optimized, and a compromised effect of the feedback overhead, feedback accuracy and system signaling overhead can be achieved.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of a scenario constituted by a macro base station and RRHs in a heterogeneous network;
Figure 2 is a diagram of an example of an ABS transmission scheme;
Figure 3 is a schematic diagram of an interference scenario in a heterogeneous network;
Figure 4 is a diagram of mapping relationship from a codeword to a layer of SU-MIMO in an LTE-A system;
Figure 5 is a schematic diagram of resources used by a DM-RS in each resource block in an LTE-A system;
Figure 6 is a flowchart of a transmission method of an embodiment of the present invention;
Figure 7 is a diagram of an example of mapping from a codeword to a layer in indicating information of an embodiment of the present invention;
Figure 8 is a schematic diagram of DM-RS resource configuration of an embodiment of the present invention;
Figure 9 is a diagram of an example of mapping from a codeword to a layer in feeding back information of an embodiment of the present invention;
Figure 10 is a schematic diagram of a transmission method of an embodiment of the present invention;
Figure 11 is another flowchart of a transmission method of an embodiment of the present invention;
Figure 12 is a schematic diagram of the structure of user equipment of an embodiment of the present invention;
Figure 13 is another schematic diagram of the structure of user equipment of an embodiment of the present invention;
Figure 14 is still another schematic diagram of the structure of user equipment of an embodiment of the present invention;
Figure 15 is a schematic diagram of the structure of a base station of an embodiment of the present invention;
Figure 16 is another schematic diagram of the structure of a base station of an embodiment of the present invention;
Figure 17 is a diagram of an example of the systematic structure of user equipment of an embodiment of the present invention; and
Figure 18 is another diagram of an example of the systematic structure of user equipment of an embodiment of the present invention.

### Detailed Description

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the appended claims.

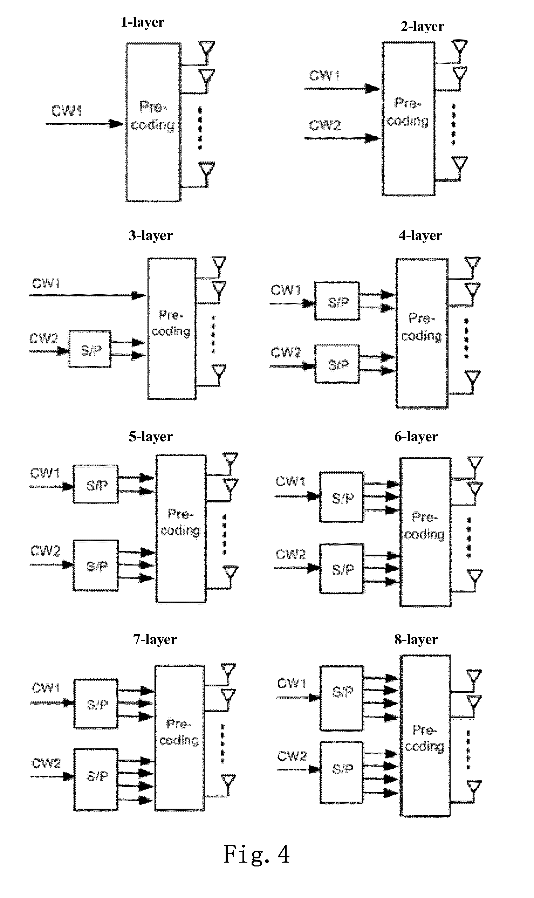

Fig. 4 is a diagram of mapping relationship from a codeword to a layer in an LTE-A single user multi-input multi-output (SU-MIMO) system. As shown in Fig. 4, the system has at most 2 codewords (CWs) and 8 layers, each codeword including at most 4 layers. For each codeword, the user needs to feed back channel quality indicator (CQI) information and acknowledgement information (ACK/NACK). Such a mapping method achieves good compromise of feedback overhead and feedback accuracy, optimizing the performance of the system to a certain extent.

However, in a heterogeneous network, distributed antennas constitute a virtual MIMO system, it is possible that the information transmitted by the virtual MIMO system includes information of multiple users, and its mapping manner from a codeword to a layer needs to be further limited and optimized, so as to achieve compromise of the feedback overhead, feedback accuracy and system signaling overhead.

On the other hand, a demodulation reference signal (DM-RS) is an importance reference signal in the LET-A system. The user equipment may use the DM-RS to estimate an equivalent channel in an MIMO transmission layer, and then demodulates data information according to the equivalent channel.

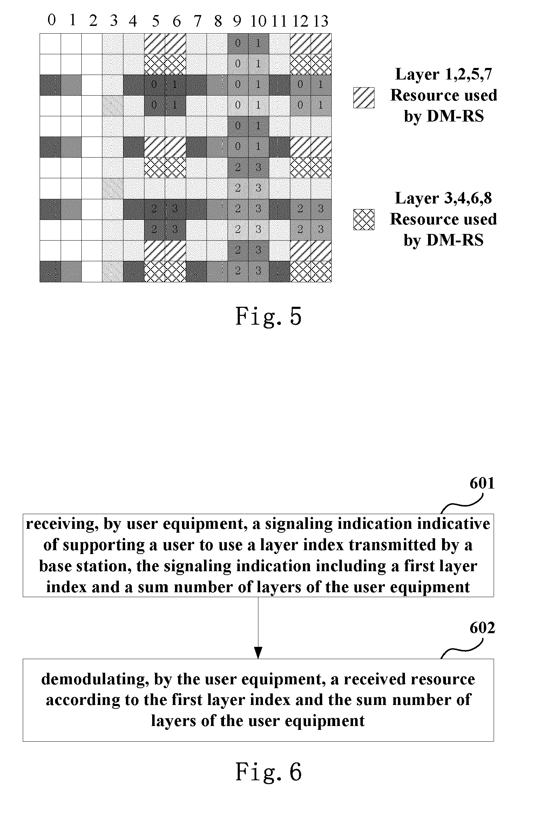

Figure 5 is a schematic diagram of resources used by a DM-RS in each resource block in an LTE-A system. As shown in Fig. 5, different transmission layers may be differentiated by using a joint frequency-division and code-division method, so as to estimate an equivalent channel. In order to simplify the support to a DM-RS, it is specified in an LTE-A system that in performing MU-MIMO transmission by users, each user may occupy not more than two layers, a sum number of layers is not more than 4, and at most 4 users are supported for transmission at the same time.

At the same time, an LTE-A system may adopt a transparent MU-MIMO manner, that is, user equipment does not know whether there exists other user equipment occupying the same resources to transmit data. When a rank of the user equipment is greater than 2, it must operate in a single-user mode, and the number of corresponding ranks is the number of layers of transmission; and when a rank of the user equipment is not greater than 2, it may operate in a single-user or a multiple-user mode, and the serial number of the transmission layer used by it is indicated by a signaling.

In a heterogeneous network, the data transmitted by a macro cell may have effect on RRH users, and inter-user interference may be reduced by using the MU-MIMO technology. After using the MU-MIMO technology, the macro cell will perform data transmission in a null space of an RRH, hence, only part of data streams may be selected.

And the limitation to the number of layers occupied by each user and to the sum number of layers may limit the further improvement of the capacity of the system. Hence, enhanced DM-RS configuration is needed to support. If a receiving side is capable of having known the sum number of layers, the receiving side may use an advance receiving algorithm to further suppress interference, so as to improve the performance of the system.

An embodiment of the present invention provides a multiple user multi-input multi-output (MU-MIMO) transmission method. Fig. 6 is a flowchart of the transmission method of the embodiment of the present invention. As shown in Fig. 6, at the user equipment side, the method includes:
step 601: receiving, by user equipment, a signaling indication indicative of supporting a user to use a layer index transmitted by a base station, the signaling indication including a first layer index and a sum number of layers of the user equipment; and
step 602: demodulating, by the user equipment, a received resource according to the first layer index and the sum number of layers of the user equipment; wherein in the resource, consecutive layer indices are adopted for data corresponding to the same user equipment.

In this embodiment, antennas of multiple transmission points in a heterogeneous network constitute virtual MIMO. Identical time-frequency transmission resources may include data of multiple users, and the base station side needs to perform mapping from a codeword to a layer on these data. And each user may turn back to the single-user transmission manner, thus, for each user, the above-described manner of mapping from a codeword to a layer of a single user may still need to be satisfied.

In this embodiment, the layer index may also be referred to as a stream index, and the sum number of layers may also be referred to as a sum number of streams. In Rel.10 MU-MIMO, quasi-orthogonal scrambling codes are used for different users to differentiate users; thus, the layer index of each user is independent. The number of layers used for each user may be referred to as a sum number of layers. The layers of a user are ordered jointly, which may be indicated in a unified manner.

In this embodiment, consecutive layer indices are used for the data in the time-frequency transmission resource corresponding to the same user equipment. For example, layer indices 10, 11 are used for the data of user equipment 1, and layer indices 20, 21 are used for the data of user equipment 2. Therefore, there exists no case where the layer indices occupied by different user equipment interpose each other.

Furthermore, in the resource, the data of the user equipment served by the base station are located before or after the data of the user equipment served by the RRHs. That is, the mapping order of a data stream of a macro user and an RRH data stream is constant. Therefore, the relative order of the layer indices of the macro user and the RRH users is determinate. For example, if data of a macro user are transmitted in a certain section of resources, the data of the macro user occupy a forward data stream.

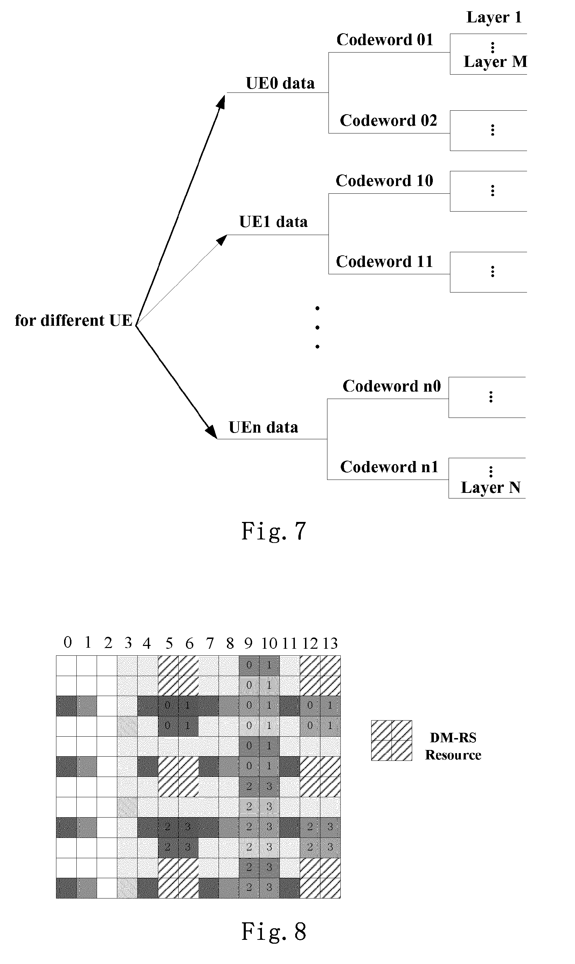

Fig. 7 is a diagram of an example of mapping from a codeword to a layer in indicating information of an embodiment of the present invention. As shown in Fig. 7, user equipment performing MU-MIMO includes user equipment UE0 served by a macro base station, user equipment UE1 served by RRH1,... user equipment UEn served by RRHn. For data of UE0, their layer indices are consecutive, and the data of UE0 are before the data of other user equipment. As to mapping between a codeword to a layer, the above-described SU mapping manner from a codeword to a layer may be employed, which shall not be described herein any further.

In this embodiment, in order to ensure the reception of the data of an enhanced MU-MIMO system, the user estimates an equivalent channel according to a DM-RS port indicated by a signaling, and reasonable configuration of the DM-RS is important to data demodulation and signaling overhead payload.

When user equipment performs transparent MU-MIMO, the base station side needs only to indicate a layer index of data used by the user equipment; and corresponding to signaling design of the transparent MU-MIMO, it may be jointly indicated by using a first layer index and a sum number of layers used by the user equipment following a principle that the layer indices of each user in the mapping from a codeword to a layer are consecutive.

Furthermore, when the user equipment performs non-transparent MU-MIMO, the layer index used by the user equipment and a total number of layers used by MU-MIMO are needed to be indicated. That is, the signaling indication may further include a total sum number of layers, and the user equipment demodulates a received resource according to the first layer index, the sum number of layers of the user equipment and the total sum number of layers.

In this embodiment, for the MU-MIMO, the layers of the users are ordered jointly, which may be indicated in a unified manner. The total sum number of layers may be a total number of the layers used by multiple users in the MU-MIMO.

Following detailed description is given by way of examples. Fig. 8 is a schematic diagram of DM-RS resource configuration of an embodiment of the present invention, wherein, the macro cell has 2 antennas, RRH1 has 2 antennas, and RRH2 has 4 antennas. In performing MU-MIMO, a macro user occupies one data stream, an RRH1 user occupies 2 data streams, and an RRH2 user occupies 3 data streams. Therefore, the system may be deemed as a virtual MIMO system having 8 antennas, with the total sum number of layers in the system being 6, the macro user using one data stream, the RRH1 user using 2-3 data streams, and the RRH2 user using 4-6 data streams.

In a mode of implementation, the total sum number of layers is determined by a base station according to a total number of layers used by the MU-MIMO. All the macro user and the RRH users indicate according to real numbers of used layers. Table 1 shows a part of the contents of a signaling indication of the embodiment of the present invention.

**Table 1**

| | |
|---|---|
| MU-MIMO: | Sum rank 6 |
| | |
| Macro UE: | layer 1 |
| Macro UE: | Sum rank 6 (101) + first layer index (000) + used layer number (00) |
| | |
| RRH1 UE: | layer 2-3 |
| RRH1 UE: | Sum rank 6 (101) + first layer index (001) + used layer number (01) |
| | |
| RRH2 UE: | layer 4-6 |
| RRH2 UE: | Sum rank 6 (101) + first layer index (011) + used layer number (10) |

As shown in Table 1, the signaling indication includes a first layer index and a sum number of layers (used layer number) of the user equipment, and may further include a total sum number of layers (sum rank) used by the MU-MIMO.

In this embodiment, for transparent MU-MIMO, the signaling may include 3 bits (at most 8 layers) of the first layer indices and 2 bits of indication of the sum number of layers used by the user equipment. And for non-transparent MU-MIMO, 3 bits of information may be used for indicating the total number of layers used by MU-MIMO. This part of information may used to estimate interference, so as to facilitate a receiving side to use an advance receiver to improve performances, such as an interference rejection combination receiver.

In this embodiment, if the number of layers used by a single user is greater than 4, the gain of the MU-MIMO is no longer obvious, thus, it may be assumed that each user uses at most 4 layers. Therefore, for example, the sum number of layers of the user equipment is less than or equal to 4. In particular implementation, if the sum number of layers of the user equipment is greater than 4, SU-MIMO may be used.

In another mode of implementation, the total sum number of layers may be determined by the base station according to the position of the user equipment. In particular, if the user equipment is served by the base station, the total sum number of layers is the sum number of layers of the user equipment, and if the user equipment is served by the remote radio head, the total sum number of layers is the sum number of layers of the user equipment plus the sum number of layers of user equipment(s) served by the base station.

In this embodiment, following actual interference scenarios are taken into consideration: a macro user at the receiving side is subjected to less interference from the RRHs; and an RRH user is subjected to less interference from other RRHs. In performing MU-MIMO, the macro cell user may be deemed as an SU-MIMO user, taking no interference from other users into consideration. Table 2 shows a part of the contents of another signaling indication of the embodiment of the present invention.

**Table 2**

| | |
|---|---|
| MU-MIMO: | Sum rank 6 |
| | |
| Macro UE: | layer 1 SU, rank 1, layer 1 |
| Macro UE: | Sum rank (00) + Used layer number (00) + first layer index (000) |
| | |
| RRH1 UE: | layer 2-3 MU, sum rank 3, layer 2-3 |
| RRH1 UE: | Sum rank (10) + Used layer number (01) + first layer index (001) |
| RRH2 UE: | layer 4-6 MU, sum rank 4, layer 4-6 |
| RRH2 UE: | Sum rank (11) + Used layer number (10) + first layer index (011) |

As shown in Table 2, the RRH1 user is configured as MU-MIMO with a sum number of layers (used layer number) being 3, combining the data of macro cell and the data transmitted by itself, and uses layers 2 and 3 to transmit data, the total sum number of layers being the sum number of layers 2 of itself plus the sum number of layers 1 of the macro UE, which is 3 and denoted by sum rank (10). And the RRH2 user is configured as MU-MIMO with a sum number of layers (used layer number) being 4, combining the data of macro cell and the data transmitted by itself, and uses layers 4, 5 and 6 by itself, the total sum number of layers being the sum number of layers 3 of itself plus the sum number of layers 1 of the macro UE, which is 4 and denoted by sum rank (11). Therefore, in comparison with Table 1, only 2 bits of information is used to indicate the total sum number of layers (sum rank) used by the MU-MIMO.

In this embodiment, for transparent MU-MIMO, a first layer index and a sum number of layers used by the user equipment are used for joint indication. And for non-transparent MU-MIMO, the total sum number of layers of the MU-MIMO still needs to be indicated. As the interference of the macro cell to the RRH is only taken into consideration in the MU-MIMO, the sum number of layers of the MU-MIMO seen by a certain user will be reduced, and if a condition in Rel.10 that the sum number of layers of the MU-MIMO is not greater than 4, it needs only 2 bits for indication. Therefore, the bits for signaling indication are further reduced.

What is described above is exemplary only, and it is not limited thereto. In particular implementation, a particular mode of implementation may be determined as actually required.

In this embodiment, after the user equipment demodulates the received resource, the method may further include: providing, by the user equipment, feedback information by using multiple codewords and/or each codeword corresponding to a data stream.

For example, the user equipment is user equipment served by the base station. The feedback information may be provided in a manner using mapping of multiple codewords, or using each codeword corresponding to a data stream, or using both mapping of multiple codewords and each codeword corresponding to a data stream, thereby improving the accuracy of the fed back channel quality information, and solving the problem that a conventional mapping manner from a codeword to a layer cannot accurately feed back a channel quality corresponding to a data stream.

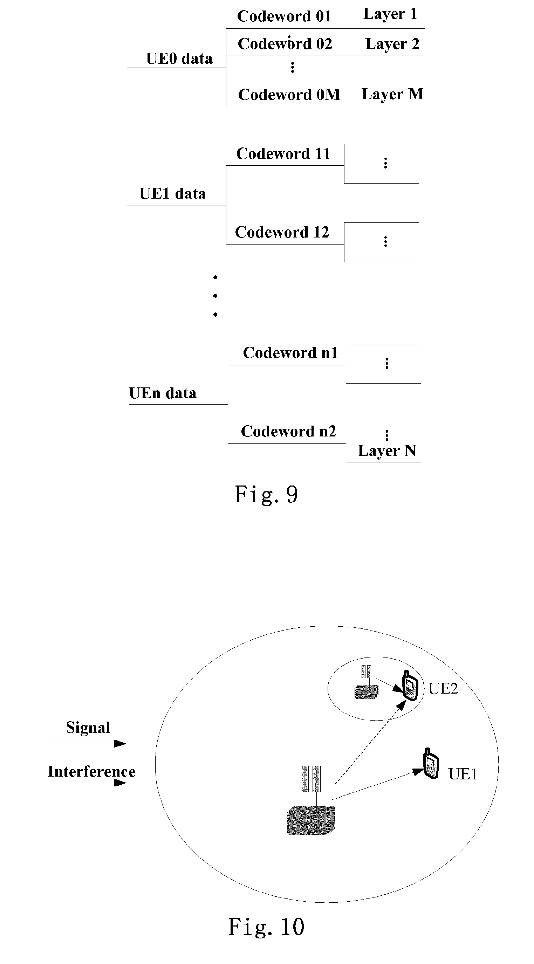

Fig. 9 is a diagram of an example of mapping from a codeword to a layer in feeding back information of an embodiment of the present invention. As shown in Fig. 9, the UE0 served by the macro base station uses codeword 01, codeword 02,... codeword 0M for feedback, and each codeword corresponds to a data stream. This may improve the feedback precision, and improves the performance of the MU-MIMO system.

It can be seen from the above embodiment that: by receiving a signaling indication indicative of supporting a user to use a layer index transmitted by a base station, the user equipment demodulates a received resource according to a first layer index and a sum number of layers in the signaling indication, thereby further limiting and optimizing the mapping manner from a codeword to a layer, and achieving good compromise of feedback overhead, feedback accuracy, and the signaling overhead of the system.

An embodiment of the present invention further provides an MU-MIMO transmission method. At a user equipment side, the method includes: providing, by user equipment, feedback information according to a position of the user equipment, so as to provide relevant interference information.

In this embodiment, in order to further improve performance of the MU-MIMO system, the user equipment side may provide enhanced feedback to the MU-MIMO. Such enhanced feedback provides relevant interference information, which may be precoding matrix indicator (PMI) information desired to be used by paired users of the MU-MIMO, and variation information of CQI relative to SU-MIMO after the enhanced MU-MIMO is used, with such a scheme being relatively good in performance; or, it may also be variation information of CQI relative to SU-MIMO after the enhanced MU-MIMO is used, with such a scheme being relatively low in feedback overhead.

Particularly, before providing by the user equipment the feedback information according to the position of the user equipment, the method may further include: determining by the user equipment whether it is served by a base station or a remote radio head; and
feeding back by the user equipment serving information of the base station when it is served by the base station, and feeding back by the user equipment interference information of the base station and serving information of the remote radio head when it is served by the remote radio head.

In this embodiment, the serving information may be PMI information, CQI information, and modulation and coding scheme (MCS) information, etc. And the interference information may be PMI information, and CQI variation information, etc., desired to be used by paired users of the MU-MIMO. However, it is not limited thereto, and may be determined as actually demanded.

In a heterogeneous network, as inequality of inter-user interference exists in paired users of the MU-MIMO, a macro cell user is almost not interfered by the RRHs, and needs not to feed back feedback information enhanced for the MU-MIMO; while the RRH cell users need to feed back relevant interference information of the macro cell to enhance the performance of the MU-MIMO. Such information may be PMI information desired to be used by paired users of the MU-MIMO, and variation information of CQI relative to SU-MIMO after the enhanced MU-MIMO is used. That is to say, there are different enhanced MU-MIMO feedback for users served by different transmission points.

Fig. 10 is a schematic diagram of a transmission method of an embodiment of the present invention, in which an enhance feedback method related to a UE position is shown. As shown in Fig. 10, the user equipment UE1 served by a base station may only feed back SU PMI/CQI information, while the user equipment UE2 served by an RRH feed back SU PMI/CQI information and MU BCI/delta CQI information. In comparison with a conventional manner, the user equipment UE1 served by a base station needs not to feed back MU BCI/delta CQI information.

Therefore, with such feedback manner configuration, relatively good compromise of feedback overhead and system performance may be achieved in the system. There are multiple forms carrying out the method of selecting transmission points by UE, such as reporting RSRP measurement or uplink reference signal measurement first, and then configuring a transmission point to which the UE corresponds by the base station via an RRC signaling.

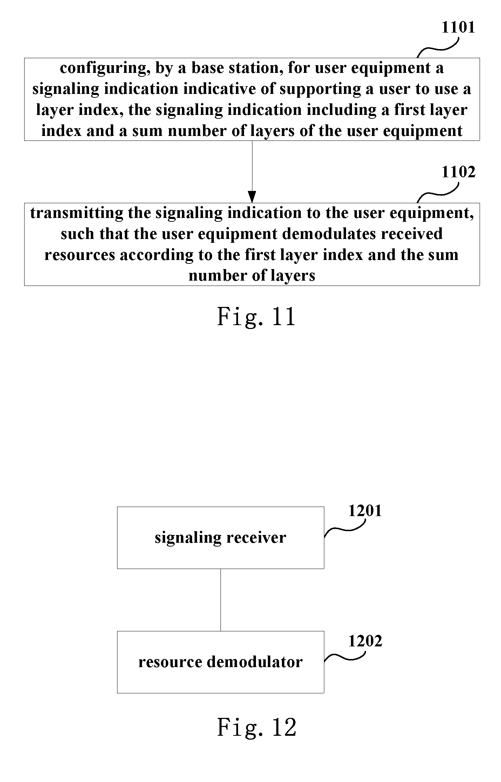

An embodiment of the present invention further provides an MU-MIMO transmission method. Fig. 11 is another flowchart of a transmission method of an embodiment of the present invention. As shown in Fig. 11, at the base station side, the method includes:
step 1101: configuring, by a base station, for user equipment a signaling indication indicative of supporting a user to use a layer index, the signaling indication including a first layer index and a sum number of layers of the user equipment; and
step 1102: transmitting the signaling indication to the user equipment, such that the user equipment demodulates received resources according to the first layer index and the sum number of layers; wherein in the resources, consecutive layer indices are adopted for data corresponding to the same user equipment.

Furthermore, in the resources, the data of the user equipment served by the base station is before or after the data of the user equipment served by a remote radio head.

Furthermore, the signaling indication may further include a total sum number of layers; and the user equipment demodulates the received resources according to the first layer index, the sum number of layers of the user equipment and the total sum number of layers.

Furthermore, the base station determines the total sum number of layers according to a total number of layers used by a multi-user multi-antenna, or the base station determines the total sum number of layers according to the position of the user equipment.

In particular, the base station determining the total sum number of layers according to the position of the user equipment includes: if the user equipment is served by the base station, the total sum number of layers is determined as the sum number of layers of the user equipment; and if the user equipment is served by the remote radio head, the total sum number of layers is determined as the sum number of layers of the user equipment plus the sum number of layers of user equipment(s) served by the base station.

It can be seen from the above embodiment that: by configuring and transmitting a signaling indication indicative of supporting a user to use a layer index, the user equipment demodulates received resources according to a first layer index and a sum number of layers in the signaling indication, thereby further limiting and optimizing the mapping manner from a codeword to a layer, and achieving good compromise of feedback overhead, feedback accuracy, and the signaling overhead of the system.

An embodiment of the present invention further provides user equipment. Fig. 12 is a schematic diagram of the structure of user equipment of an embodiment of the present invention. As shown in Fig. 12, the user equipment includes: a signaling receiver 1201 and a resource demodulator 1202;
the signaling receiver 1201 is configured to receive a signaling indication indicative of supporting a user to use a layer index transmitted by a base station, the signaling indication including a first layer index and a sum number of layers of the user equipment;
and the resource demodulator 1202 is configured to demodulate received resources according to the first layer index and the sum number of layers of the user equipment; wherein in the resources, consecutive layer indices are adopted for data corresponding to the same user equipment.

Furthermore, in the resources, the data of the user equipment served by the base station is before or after the data of the user equipment served by a remote radio head.

Furthermore, the signaling indication further includes a total sum number of layers; and the resource demodulator 1202 is further configured to demodulate the received resources according to the first layer index, the sum number of layers of the user equipment and the total sum number of layers.

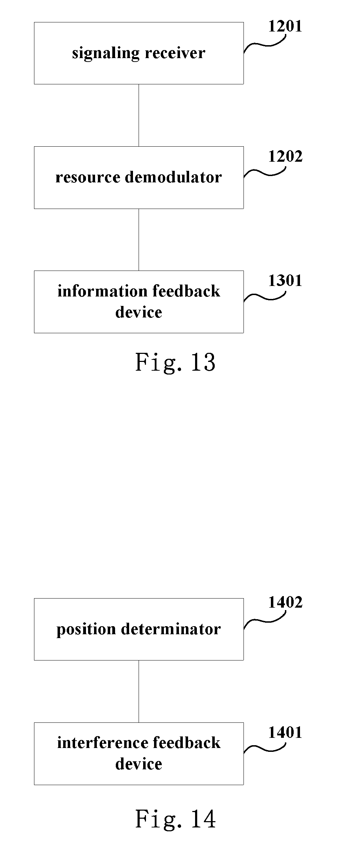

Fig. 13 is another schematic diagram of the structure of user equipment of an embodiment of the present invention. As shown in Fig. 13, the user equipment includes: a signaling receiver 1201 and a resource demodulator 1202, as described above.

As shown in Fig. 13, the user equipment further includes: an information feedback device 1301;
the information feedback device 1301 is configured to provide feedback information by using multiple codewords and/or each code word corresponding to a data stream after demodulating the received resources.

It can be seen from the above embodiment that: by receiving a signaling indication indicative of supporting a user to use a layer index transmitted by a base station, the user equipment demodulates received resources according to a first layer index and a sum number of layers in the signaling indication, thereby further limiting and optimizing the mapping manner from a codeword to a layer, and achieving good compromise of feedback overhead, feedback accuracy, and the signaling overhead of the system.

An embodiment of the present invention further provides user equipment. Fig. 14 is still another schematic diagram of the structure of user equipment of an embodiment of the present invention. As shown in Fig. 14, the user equipment includes: an interference feedback device 1401;
the interference feedback device 1401 is configured to provide feedback information, so as to provide relevant interference information.

Furthermore, as shown in Fig. 14, the user equipment further includes: a position determinator 1402;
the position determinator 1402 is configured to determine whether the user equipment is served by a base station or a remote radio head;
and the interference feedback device is further configured to feed back serving information of the base station if the user equipment is served by the base station, and to feed back interference information of the base station and serving information of the remote radio head if the user equipment is served by the remote radio head.

It can be seen from the above embodiment that with such feedback manner configuration, relatively good compromise of feedback overhead and system performance may be achieved in the system.

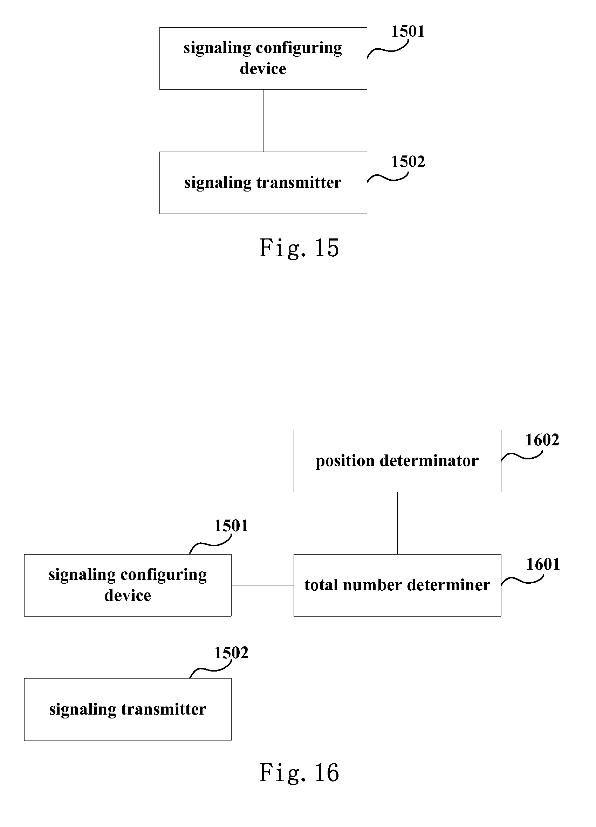

An embodiment of the present invention further provides a base station. Fig. 15 is a schematic diagram of the structure of a base station of an embodiment of the present invention. As shown in Fig. 15, the base station includes: a signaling configuring device 1501 and a signaling transmitter 1502;
the signaling configuring device 1501 is configured to configure for user equipment a signaling indication indicative of supporting a user to use a layer index, the signaling indication including a first layer index and a sum number of layers of the user equipment; and
the signaling transmitter 1502 is configured to transmit the signaling indication to the user equipment, such that the user equipment demodulates received resources according to the first layer index and the sum number of layers of the user equipment; wherein in the resources, consecutive layer indices are adopted for data corresponding to the same user equipment.

Fig. 16 is another schematic diagram of the structure of a base station of an embodiment of the present invention. As shown in Fig. 16, the base station includes: a signaling configuring device 1501 and a signaling transmitter 1502, as described above.

Furthermore, the signaling indication further includes a total sum number of layers. As shown in Fig. 16, the base station may further include: a total number determiner 1601;
the t determiner 1601 is configured to determine the total sum number of layers according to a total number of layers used by the MU-MIMO, or to determine the total sum number of layers according to the position of the user equipment.

As shown in Fig. 16, the base station may further include: a position determinator 1602; the position determinator 1602 is configured to determine whether the user equipment is served by a base station or a remote radio head;
and the total number determiner 1601 is configured to determine that the total sum number of layers is the sum number of layers of the user equipment, if the user equipment is served by the base station, and that the total sum number of layers is the sum number of layers of the user equipment plus the sum number of layers of user equipment(s) served by the base station, if the user equipment is served by the remote radio head.

It can be seen from the above embodiment that: by configuring a signaling indication indicative of supporting a user to use a layer index, the user equipment demodulates received resources according to a first layer index and a sum number of layers in the signaling indication, thereby further limiting and optimizing the mapping manner from a codeword to a layer, and achieving good compromise of feedback overhead, feedback accuracy, and the signaling overhead of the system.

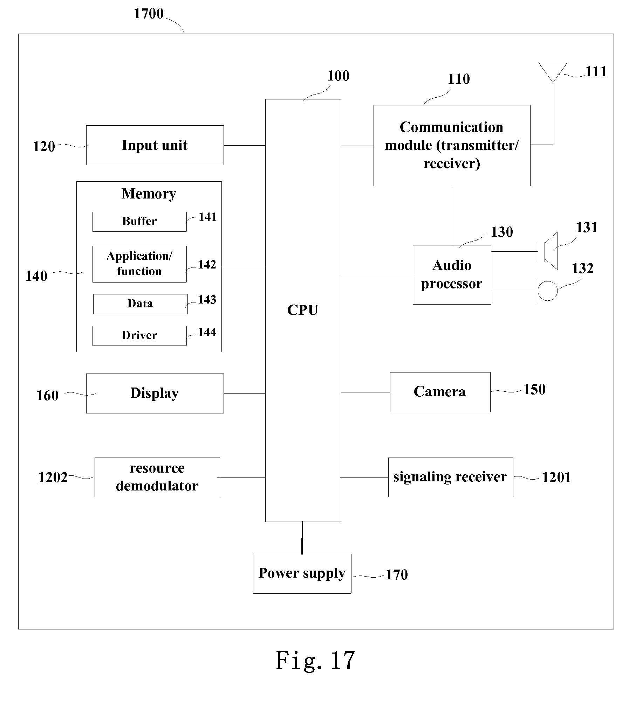

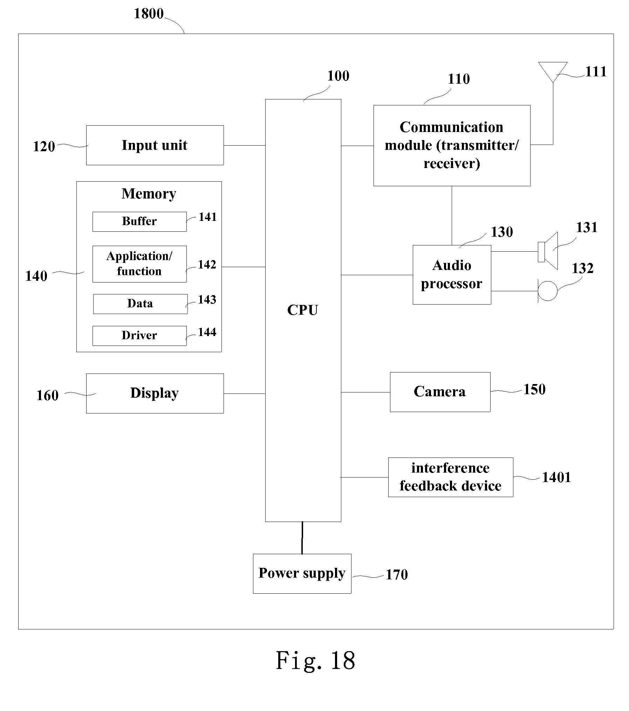

Fig. 17 is a diagram of an example of the systematic structure of user equipment 1700 of an embodiment of the present invention, which includes the signaling receiver 1201 and the resource demodulator 1202 as described above. And Fig. 18 is another diagram of an example of the systematic structure of user equipment 1800 of an embodiment of the present invention, which includes the interference feedback device 1401 as described above.

As shown in Figs. 17 and 18, the electronic equipment 1700 and 1800 may further include a CPU 100, a communication module 110, an input unit 120, an audio processing unit 130, a memory 140, a camera 150, a display 160, and a power supply 170. It should be noted that Figs. 17 and 18 are illustrative only, and other types of structures may also be used for supplementing or replacing this structure, so as to implement the function of telecommunications or other functions.

The CPU 100 (also referred to as a controller or an operational control, which may include a microprocessor or other processing devices and/or logic devices) receives input and controls each part and operation of the electronic equipment. The input unit 120 provides input to the CPU 100. The input unit 120 may be for example a key or touch input device. The camera 150 is used to take image data and provide the taken image data to the CPU 100 for use in a conventional manner, for example, for storage, and transmission, etc.

The power supply 170 is used to supply power to the electronic equipment. And the display 160 is used to display the objects of display, such as images, and characters, etc. The display may be for example an LCD display, but it is not limited thereto.

The memory 140 is coupled to the CPU 100. The memory 140 may be a solid memory, such as a read-only memory (ROM), a random access memory (RAM), and an SIM card, etc., and may also be such a memory that stores information when the power is interrupted, may be optionally erased and provided with more data. Examples of such a memory are sometimes referred to as an EPROM, etc. The memory 140 may also be certain other types of devices. The memory 140 includes a buffer memory 141 (sometimes referred to as a buffer). The memory 140 may include an application/function storing portion 142 used to store application programs and function programs, or to execute the flow of the operation of the electronic equipment 1000 via the CPU 100.

The memory 140 may further include a data storing portion 143 used to store data, such as a contact person, digital data, pictures, voices and/or any other data used by the electronic equipment. A driver storing portion 144 of the memory 140 may include various types of drivers of the electronic equipment for the communication function and/or for executing other functions (such as application of message transmission, and application of directory, etc.) of the user equipment.

The communication module 110 is a transmitter/receiver 110 transmitting and receiving signals via an antenna 111. The communication module (transmitter/receiver) 110 is coupled to the CPU 100 to provide input signals and receive output signals, this being similar to the case in a conventional mobile phone.

A plurality of communication modules 110 may be provided in the same user equipment for various communication technologies, such a cellular network module, a Bluetooth module, and/or wireless local network module, etc. The communication module (transmitter/receiver) 110 is also coupled to a loudspeaker 131 and a microphone 132 via the audio processing unit 130, for providing audio output via the loudspeaker 131, and receiving audio input from the microphone 132, so as to execute conventional telecommunications functions. The audio processing unit 130 may further include any suitable buffer, decoder, and amplifier, etc. Furthermore, the audio processing unit 130 is coupled to the CPU 100, so that voice recording is enabled in the native device, and the voices stored in the native device are enabled to be played via the loudspeaker 131.

An embodiment of the present invention further provides a computer-readable program, wherein when the program is executed in user equipment, the program enables a computer to carry out the MU-MIMO transmission method as described above in the user equipment.

An embodiment of the present invention further provides a storage medium in which a computer-readable program is stored, wherein the computer-readable program enables a computer to carry out the MU-MIMO transmission method as described above in user equipment.

An embodiment of the present invention further provides a computer-readable program, wherein when the program is executed in a base station, the program enables a computer to carry out the MU-MIMO transmission method as described above in the base station.

An embodiment of the present invention further provides a storage medium in which a computer-readable program is stored, wherein the computer-readable program enables a computer to carry out the MU-MIMO transmission method as described above in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A multiple user multi-input multi-output (MU-MIMO) transmission method, comprising:
receiving, by user equipment, a signaling indication indicative of supporting a user to use a layer index transmitted by a base station, the signaling indication comprising a first layer index and a sum number of layers of the user equipment; and
demodulating a received resource according to the first layer index and the sum number of layers of the user equipment; wherein in the resource, consecutive layer indices are adopted for data corresponding to the same user equipment.

2. The method according to claim 1, wherein in the resource, the data of the user equipment served by the base station is before or after the data of the user equipment served by a remote radio head.

3. The method according to claim 2, wherein the signaling indication further comprises a total sum number of layers; and
the user equipment demodulates the received resource according to the first layer index, the sum number of layers of the user equipment and the total sum number of layers.

4. The method according to claim 3, wherein the total sum number of layers is determined by the base station according to a total number of layers used by the MU-MIMO, or the total sum number of layers is determined by the base station according to a position of the user equipment.

5. The method according to claim 4, wherein the total sum number of layers being determined by the base station according to a position of the user equipment comprises:
if the user equipment is served by the base station, the total sum number of layers is the sum number of layers of the user equipment; and
if the user equipment is served by the remote radio head, the total sum number of layers is the sum number of layers of the user equipment plus the sum number of layers of user equipment(s) served by the base station.

6. The method according to claim 1, wherein after demodulating the received resource, the method further comprises:
providing, by the user equipment, feedback information by using multiple codewords or each codeword corresponding to a data stream.

7. The method according to claim 6, wherein the user equipment is user equipment served by the base station.

8. The method according to claim 1, wherein the sum number of layers of the user equipment is less than or equal to 4.

9. An MU-MIMO transmission method, comprising:
providing, by user equipment, feedback information according to a position of the user equipment, so as to provide relevant interference information.

10. The method according to claim 9, wherein before the providing by the user equipment the feedback information according to a position of the user equipment, the method further comprises:
determining, by the user equipment, whether it is served by a base station or a remote radio head; and
feeding back, by the user equipment, serving information of the base station when it is served by the base station, and feeding back by the user equipment interference information of the base station and serving information of the remote radio head when it is served by the remote radio head.

11. An MU-MIMO transmission method, comprising:
configuring, by a base station for user equipment, a signaling indication indicative of supporting a user to use a layer index, the signaling indication comprising a first layer index and a sum number of layers of the user equipment; and
transmitting the signaling indication to the user equipment, such that the user equipment demodulates a received resource according to the first layer index and the sum number of layers; wherein in the resource, consecutive layer indices are adopted for data corresponding to the same user equipment.

12. The method according to claim 11, wherein in the resource, the data of the user equipment served by the base station is before or after the data of the user equipment served by a remote radio head.

13. The method according to claim 12, wherein the signaling indication further comprises a total sum number of layers;
and the user equipment demodulates the received resource according to the first layer index, the sum number of layers of the user equipment and the total sum number of layers.

14. The method according to claim 13, wherein the method further comprises:
determining, by the base station, the total sum number of layers according to a total number of layers used by a multi-user multi-antenna, or determining by the base station the total sum number of layers according to a position of the user equipment.

15. The method according to claim 14, wherein the determining by the base station the total sum number of layers according to a position of the user equipment comprises:
determining, if the user equipment is served by the base station, the total sum number of layers as the sum number of layers of the user equipment; and
determining, if the user equipment is served by the remote radio head, the total sum number of layers as the sum number of layers of the user equipment plus the sum number of layers of user equipment(s) served by the base station.

16. User equipment, comprising:
a signaling receiver, configured to receive a signaling indication indicative of supporting a user to use a layer index transmitted by a base station, the signaling indication comprising a first layer index and a sum number of layers of the user equipment; and
a resource demodulator, configured to demodulate a received resource according to the first layer index and the sum number of layers of the user equipment; wherein in the resource, consecutive layer indices are adopted for data corresponding to the same user equipment.

17. The user equipment according to claim 16, wherein in the resource, the data of the user equipment served by the base station is before or after the data of the user equipment served by a remote radio head.

18. The user equipment according to claim 16 or 17, wherein the signaling indication further comprises a total sum number of layers;
and the resource demodulator is further used to demodulate the received resource according to the first layer index, the sum number of layers of the user equipment and the total sum number of layers.

19. The user equipment according to claim 16, wherein the user equipment further comprises:
an information feedback device, configured to provide feedback information by using multiple codewords and/or each code word corresponding to a data stream after demodulating the received resource.

20. User equipment, comprising:
an interference feedback device, configured to provide feedback information, so as to provide relevant interference information.

21. The user equipment according to claim 20, wherein the user equipment further comprises:
a position determinator, configured to determine whether the user equipment is served by a base station or a remote radio head;
and the interference feedback device is further configured to feed back serving information of the base station if the user equipment is served by the base station, and to feed back interference information of the base station and serving information of the remote radio head if the user equipment is served by the remote radio head.

22. A base station, comprising:
a signaling configuring device, configured to configure for user equipment a signaling indication indicative of supporting a user to use a layer index, the signaling indication comprising a first layer index and a sum number of layers of the user equipment; and
a signaling transmitter, configured to transmit the signaling indication to the user equipment, such that the user equipment demodulates a received resource according to the first layer index and the sum number of layers of the user equipment; wherein in the resource, consecutive layer indices are adopted for data corresponding to the same user equipment.

23. The base station according to claim 22, wherein the signaling indication further comprises a total sum number of layers, and the base station further comprises:
a total number determiner, configured to determine the total sum number of layers according to a total number of layers used by the MU-MIMO, or to determine the total sum number of layers according to a position of the user equipment.

24. The base station according to claim 23, wherein the base station further comprises:
a position determinator, configured to determine whether the user equipment is served by a base station or a remote radio head;
and the total number determiner is configured to determine that the total sum number of layers is the sum number of layers of the user equipment if the user equipment is served by the base station, and that the total sum number of layers is the sum number of layers of the user equipment plus the sum number of layers of user equipment(s) served by the base station if the user equipment is served by the remote radio head.

25. A computer-readable program, wherein when the program is executed in user equipment, the program enables a computer to carry out the MU-MIMO transmission method as claimed in any of claims 1-10 in the user equipment.

26. A storage medium in which a computer-readable program is stored, wherein the computer-readable program enables a computer to carry out the MU-MIMO transmission method as claimed in any of claims 1-10 in user equipment.

27. A computer-readable program, wherein when the program is executed in a base station, the program enables a computer to carry out the MU-MIMO transmission method as claimed in any of claims 11-15 in the base station.

28. A storage medium in which a computer-readable program is stored, wherein the computer-readable program enables a computer to carry out the MU-MIMO transmission method as claimed in any of claims 11-15 in a base station.
